Europäisches Patentamt

European Patent Office

Office européen des brevets

(11) Publication number: **0 368 549**
**A2**

# (12) EUROPEAN PATENT APPLICATION

(21) Application number: **89311310.0**

(51) Int. Cl.5: **H04L 7/02, H04J 3/16**

(22) Date of filing: **01.11.89**

(30) Priority: **05.11.88 GB 8825954**

(43) Date of publication of application:
**16.05.90 Bulletin 90/20**

(84) Designated Contracting States:
**DE FR IT NL**

(71) Applicant: **STC PLC**
**1B Portland Place**
**London W1N 3AA(GB)**

(72) Inventor: **Powell, William Hugh**
**16 Vantorts Road**
**Sawbridgeworth Herts CM21 9NB(GB)**

(54) **Multiplexed fibre optic system with auxiliary channel.**

(57) A digital data transmission system wherein digital data channels are serially multiplexed and in which channel identification is encoded by displacements of zero crossings of the multiplexed data. The multiplexed data stream is differentially encoded so that data bits of one significance are represented by the presence of transitions in the transmitted signal at predetermined times and data bits of another significance are represented by the absence of transitions at said predetermined times. The differentially encoded signals are added to a clock at half the interleaved bit frequency so that the rising and falling edges of the bits are advanced and retarded according to their bit position. The multiplexed data with added clock is then high-pass filtered and linearly added to band limited auxiliary data before transmission.

Fig. 1.

## MULTIPLEXED FIBRE OPTIC SYSTEM WITH AUXILIARY CHANNEL.

This invention relates to multiplexed fibre optic systems in which two or more wideband signals are multiplexed together with auxiliary channels of lower bandwidth.

Many applications are seen for digital fibre optic systems together with other traffic of lower bandwidth. Typical applications include:

(a) railway surveillance systems with voice and control signals accompanying two video signals,

(b) in cable television customer access connections (such as implemented on co-axial cable), carrying hi-fi sound channels in addition to two video channels.

Fundamental requisites of a multiplexed digital system are:

(i) identification of the channels to facilitate demultiplexing, and

(ii) transmission of clock information to the receiver.

Preferably the channel identities and clock information can be dispensed with by coding the digital streams in such a way that this information is inherent in the transmitted data and can be extracted from the data at the receiver. For example, it is widely known to encode digital data in such a manner that clock information can be extracted at the receiver using selective filtering techniques.

According to one aspect of the present invention there is provided a digital data transmission system wherein digital data channels are serially multiplexed and framing and clock information is impressed on the digital data stream by displacement of zero crossings according to a predetermined rule based on bit position in the data stream.

In one embodiment of the invention the predetermined rule is based on both bit position and data values in the data stream.

According to another aspect of the invention there is provided a digital data transmission system wherein two digital data channels are serially multiplexed and in which the odd and even numbered time-slots have respectively different durations. In such a system the channel carried in the odd time-slots can be readily distinguished at the receiver from the channel carried in the even time-slots.

According to a further aspect of the invention the digital data streams to be multiplexed are encoded by respective one-bit analogue-to-digital converters the outputs of which are interleaved to form the serially multiplexed channels, the multiplexed data stream is differentially encoded so that data bits of one significance are represented by the presence of transitions in the transmitted signal at predetermined times and data bits of another significance are represented by the absence of transitions at said predetermined times.

According to yet another aspect of the invention the differentially encoded signals are added linearly to an auxiliary data stream of lower bandwidth than the bandwidth of the channels which are multiplexed.

Embodiments of the invention will now be described with reference to the accompanying drawings, in which :-

Figure 1 is a schematic illustration of a multiplexing transmitter arrangement for a fibre optic system,

Figure 2 is a schematic illustration of a demultiplexing receiver,

Figure 3 illustrates frequency spectra, and

Figure 4 illustrates certain waveforms relating to the operation of the arrangement of Figures 1 and 2.

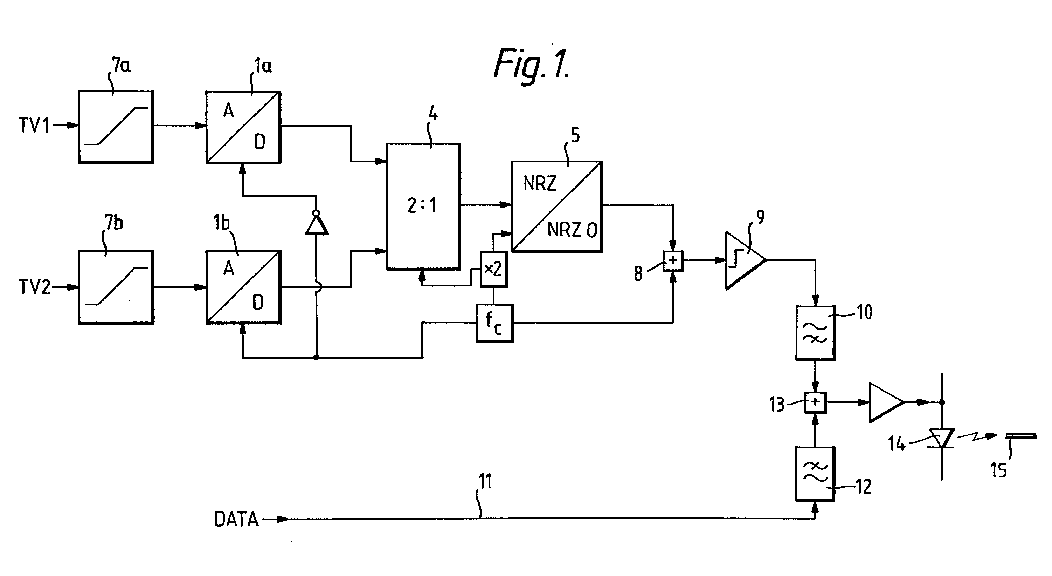

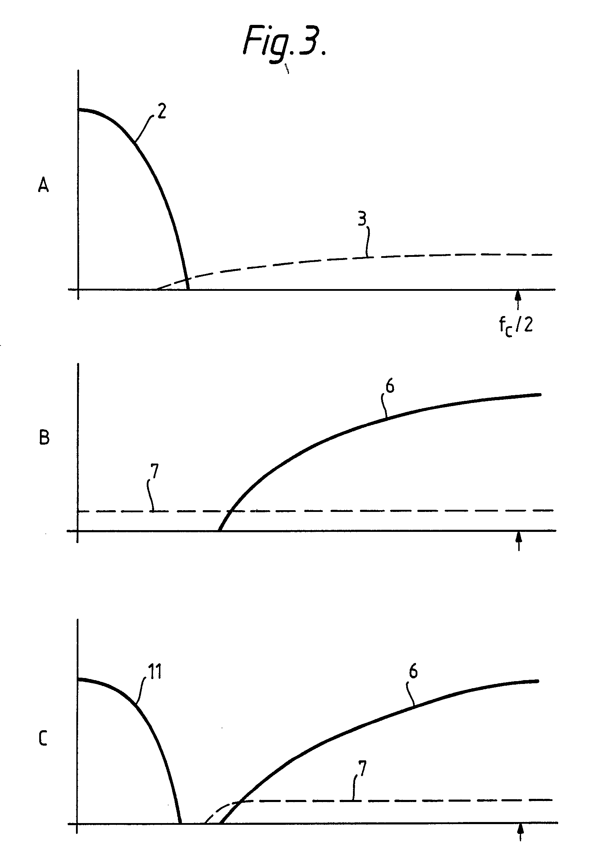

The arrangement of Figure 1 is a transmitter for two video channels plus an auxiliary data channel of lower bandwidth over a fibre optic system. The two video channels TV1 and TV2 are separately converted to one-bit serial digital data by respective sigma-delta analogue-to-digital (A/D) converters using opposite phase of a common clock $f_c$. The grey scale of the picture content is represented by the relative density of marks to spaces in the digital code. The code may therefore be referred to as pulse density modulation (PDM). In general a PDM coder is a sigma-delta coder whose overload characteristics and/or spectral noise density have been modified to achieve improved performance. The frequency spectrum of the digital code produced by the PDM coder is shown in Figure 3a. It contains a signal spectrum 2 at baseband that closely matches the video signal that has been coded. The PDM coder also generates a noise spectrum 3 which is largely driven out of the frequency bands occupied by the signal 2 by the operation of the coder. The two PDM data streams are next interleaved by multiplexer 4 to form a single data stream at twice the original bit rate utilising a clock $2f_c$. The overall ratio of marks to spaces will represent the mean of the grey scale values for TV1 and TV2 and therefore still has the PDM characteristic spectrum with signal energy in a low frequency baseband and noise driven to higher frequencies by the coder operation as in Figure 3a. It is worth noting that since the two channels TV1 and TV2 are multiplexed by simple bit interleaving they can be identified in the first instance by regarding TV1 as occurring in the odd numbered time slots and TV2 in the even numbered time slots of the multiplexed signal.

The multiplexed data stream is next differentially encoded in coder 5. In this process spaces are represent by transitions and marks by absence of transition between adjacent time slots in the output data stream. This transformed data will henceforth be referred to as NRZO (non-return to zero 0) format. (In the converse case where marks are represented by transitions and spaces by absence of transitions the format would be referred to as NRZ1.) The density of the NRZ0 format data stream varies with the mean of the values of the grey scale in TV1 and TV2. The transition are most frequent when both video channels are simultaneously at peak white or at peaks of colour subcarrier (which may even exceed the peak white level). This variation in transition rate with grey scale is analogous to frequency modulation (FM). Indeed, inspection of the NRZ0 spectrum confirms that it is like FM, as shown in Figure 3b at 6. The noise spectrum 3 of Figure 3a is dispersed by differential coding giving a more uniform spectrum 7 in Figure 3b. It will be noted that simultaneous "white" signals of excessive amplitude would 'deviate' the FM signal to zero frequency. The analogue system levels should therefore be chosen so as to give adequate margin against such overload. It is possible to ensure against the application of excessive levels to the inputs of coders by including clippers 7a, 7b which slice off signals beyond the design maximum. In the present case it will be assumed that the 'deviation' 6 of the combined coded video signals leaves a low frequency band (e.g. 0-10MHz) clear of video related energy and that the clipping ensures that this is so.

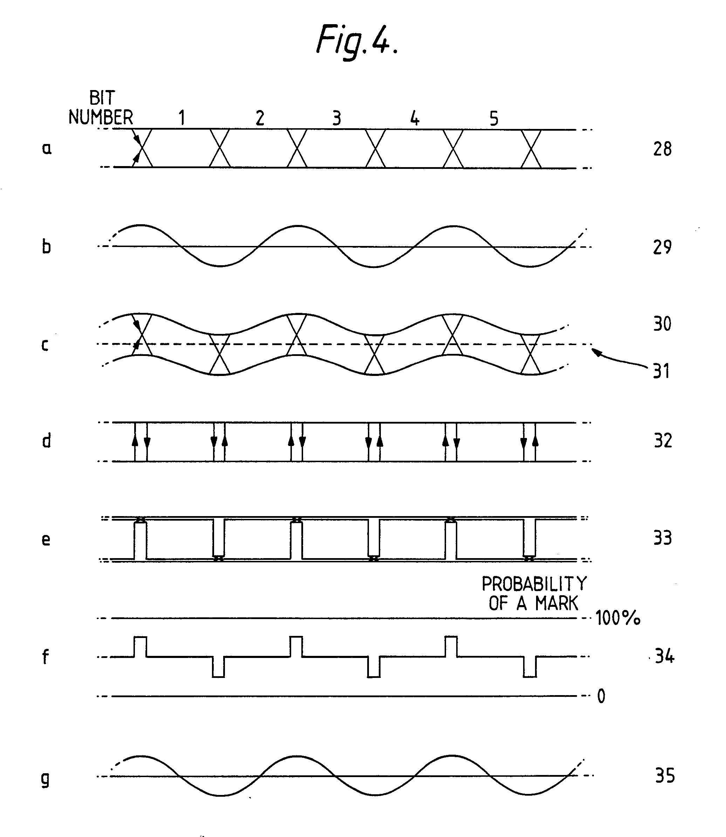

Following transformation of multiplexed data to NRZ0 format a sinusoidal clock signal is linearly added to the data stream. The clock frequency, $f_c$ is half that of the NRZ0 data stream. The resultant signal is then clipped by a limiter circuit to standard digital levels. These operations are illustrated in Figure 4.

Referring to Figure 4a, 28 is a diagram of voltage (vertical axis) against time ( horizontal axis) and represents the superposition of all possible bit sequences in the NRZ0 data stream. Logic transitions from one state to the other are shown by the diagonal lines and are considered to be symmetrical. The transitions are shown as diagonals in the drawing since they take a significant amount of time of the order of five percent compared with one bit period.

Figure 4c, 30 shows the result of linear addition of the clock $f_c$, 29, and data signal 28. As can be seen from 30, every rising transition at the start of an odd bit position now crosses the digital decision level threshold, 31, earlier than the corresponding bit start position in the original NRZ0 data stream.

Similarly every rising transition at an even bit position crosses the decision threshold later than its position in the original NRZ0 data. For falling transitions edges are respectively later and earlier for odd and even time-slots. The positions of rising and falling edges are shown diagrammatically at 32, Figure 4d.

The amplitude of the linearly added clock $f_c$, Figure 4b, is chosen so that the variations in bit duration are of the order of $\pm$ 5%. The amplitude used will depend upon the rise and fall time of the original NRZ0 data stream.

Provided that there is sufficient randomness in the NRZ0 data stream the processed data stream 30, will contain a spectral component of the clock $f_c$. Randomness of the data stream can be largely ensured by always operating the A/D converters, 1a and 1b, Figures 1, with in-range inputs. The limiters, 7a and 7b, Figure 1, ensure input signals are always in-range. Randomness could also be ensured by scrambling the data stream. The filter 10 now removes the spectral noise of the multiplexed PDM video signal. An auxiliary data stream 11 is band limited by low-pass filter 12 and added linearly to the multiplexed PDM video signals at 13. This composite signal is then used to modulate linearly a light emitting diode (LED) 14, or a laser diode, the output of which is launched into the optical fibre 15.

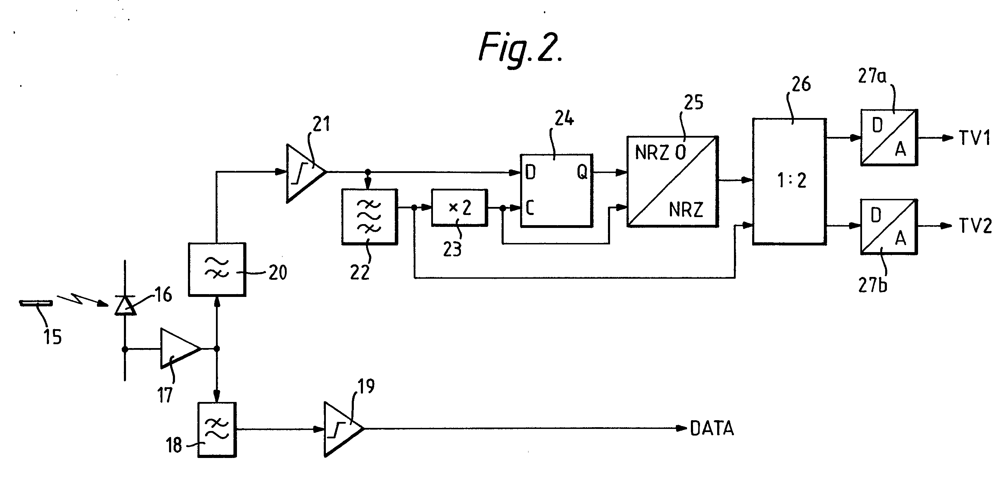

At the receiver, Figure 2, the optical fibre 15 illuminates photodiode 16. The electrical output of the diode is applied to amplifier 17. The received signals are fed to a low-pass filter 18 where the auxiliary data channel is recovered. The output of filter 8 is passed through a limiting (or AGC controlled) amplifier 19 to provide the data output.

The output of amplifier 17 is also applied to a high-pass filter 20 and the multiplexed video signals are then restored to working amplitude by limiting amplifier 21. The output of amplifier 21 is the waveform 32, shown as Figure 4d.

The clock $f_c$ is recovered by means of a narrow band-pass filter, 22. The basis of clock recovery is illustrated by Figure 4, 33 and 34. At the start of each bit position in the recovered data stream the signal can either remain at the current level, or can switch to the inverse level. This is illustrated diagrammatically by 33. At the start of an odd bit position rising edge transitions occur early relative to the nominal bit start time, and falling edge transitions occur late. For the interval of time between when rising edges occur and falling edges occur at the start of an odd bit period there are three ways in which the signal can be high (i.e. signal remains high during the interval, signal goes high to low after the interval, signal goes low to high before the interval), and one way in which the signal can be low, (i.e. signal remains low during the interval). Correspondingly, at the start of even bit periods there are three ways in which the signal can be low and one in which it can be high. Assuming that the data stream is largely random in nature the probability of a mark is therefore about 75% at the start of odd bit periods and 25% at the start of even bit periods. This is illustrated in Figure 4, 34.

Consequently if the regenerated data signal is filtered by a high Q filter, with minimum attenuation at $f_c$, Figure 2, 22, a regenerated clock of frequency $f_c$, and of the correct phase relation to odd and even data bits will be produced at the output, Figure 4, 35. The filter should have a high Q value so that noise and short term random variations in the strength of the $f_c$ spectral component do not adversely disrupt the filter output.

The frequency $f_c$ can be doubled to $2f_c$ by a frequency doubler 23 and used to regenerate the multiplexed data by decision circuit 24. The regenerated data is then reconverted back from the NRZ0 format to the original bit interleaved signal in converter 25. The interleaved bit streams are applied to demultiplexer 26 together with the recovered clock $f_c$ to separate the original video channels. Odd and even time-slots are identified from the phase of the recovered clock $f_c$ so there is no ambiguity in channel numbering from the demultiplexer. Finally the PDM decoders 27a, 27b deliver the two analogue signals TV1 and TV2 to their destinations.

The auxiliary data channel can be accommodated in the system because the differentially encoded PDM does not place spectral energy 6, Figure 3c, of the coded signal in the lowest parts of the baseband, where the spectral energy 11 of the auxiliary data channel occurs.

## Claims

1. According to one aspect of the present invention there is provided a digital data transmission system characterised in that digital data channels are serially multiplexed and framing and clock information is impressed on the digital data stream by displacement of zero crossings according to a predetermined rule based on bit position in the data stream.

2. A system according to claim 1 characterised in that the predetermined rule is based on both bit position and data values in the data stream.

3. A digital data transmission system characterised in that two digital data channels are serially multiplexed and in which the odd and even numbered time-slots have respectively different durations.

4. A system according to claim 3 characterised in that the digital data streams to be multiplexed are encoded by respective one-bit analogue-to-digital converters the outputs of which are interleaved to form the serially multiplexed channels, the multiplexed data stream is differentially encoded so that data bits of one significance are represented by the presence of transitions in the transmitted signal at predetermined times and data bits of another significance are represented by the absence of transitions at said predetermined times.

5. A system according to claim 3 characterised in that the differentially encoded signals are added linearly to an auxiliary data stream of lower bandwidth than the bandwidth of the channels which are multiplexed.

6. A system according to claim 4 or 5 characterised in that one bit analogue-to-digital converters are sigma-delta A/D converters.

7. A system according to claim 4, 5 or 6 characterised in that the differentially encoded signals are added linearly to a clock signal at half the frequency of the interleaved bits.

Fig. 1.

Fig.2.

# Fig.3.

# Fig.4.